(19) Europäisches Patentamt
European Patent Office
Office européen des brevets

(11) Veröffentlichungsnummer: **0 518 023 A2**

# (12) EUROPÄISCHE PATENTANMELDUNG

(21) Anmeldenummer: **92106205.5**

(51) Int. Cl.$^5$: **C08L 77/00**

(22) Anmeldetag: **10.04.92**

(30) Priorität: **12.06.91 DE 4119300**

(43) Veröffentlichungstag der Anmeldung:
**16.12.92 Patentblatt 92/51**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Finke, Jürgen Dr.**
**Münsterlandstrasse 22**
**W-4370 Marl(DE)**
Erfinder: **Modler, Harald, Dr.**
**Hattinger Strasse 103**
**W-4630 Bochum(DE)**
Erfinder: **Beyer, Horst**
**Bitterfelder Strasse 9a**
**W-4370 Marl(DE)**

## (54) Polyamidformmassen.

(57) 2.1 Es sollen Formmassen mit verbesserten thermischen Eigenschaften zur Verfügung gestellt werden.

2.2 Dies wurde durch Formmassen erreicht, die

I. ein aromatisches Polyamid mit der Grundstruktur

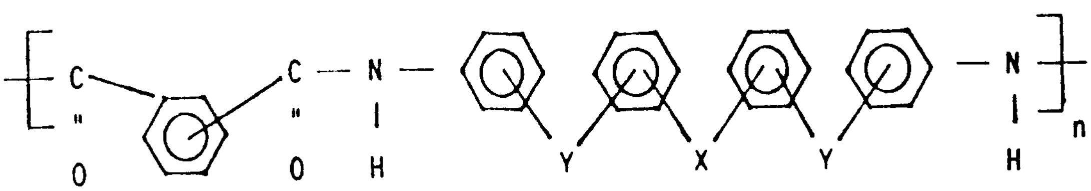

und

II. ein amorphes Polyamid

enthalten.

2.3 Mit Hilfe der Erfindung gelingt es, Formmassen mit dem gewünschten verbesserten Eigenschaftsbild zu erhalten.

EP 0 518 023 A2

Gegenstand der Erfindung sind Polyamidformmassen.

Formmassen auf Basis aromatischer Polyamide mit der Grundstruktur

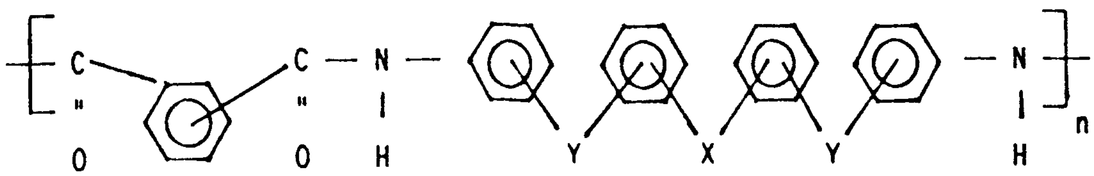

sind grundsätzlich bekannt (DE-OS 36 09 011). Gleichfalls bekannt sind Polyamidformmassen mit amorpher Struktur (EP-0 053 876; EP-A-0 271 308; DE-A-36 00 015). Insbesondere bei letzteren ist die Wärmeformbeständigkeit sowie die Dauergebrauchstemperatur unbefriedigend.

Aufgabe der Erfindung war es, Formmassen zur Verfügung zu stellen, die die geschilderten Nachteile der Produkte des Standes der Technik nicht aufweisen.

Diese Aufgabe wurde durch Formmassen gelöst, die

I. ein aromatisches Polyamid mit der Grundstruktur

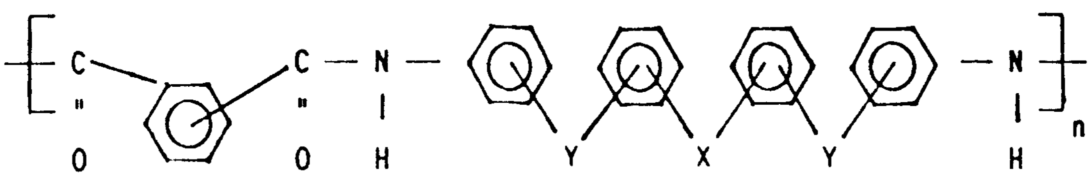

wobei

X: $-SO_2-$; -CO-

Y: -O-; -S-

bedeuten, und

II. ein amorphes Polyamid

enthalten.

Bevorzugt werden Formmassen, bei denen das Gewichtsverhältnis der Komponente I. zu Komponente II. im Bereich von 99 : 1 bis 1 : 99, vorzugsweise im Bereich von 90 : 10 bis 10 : 90, liegt.

Die Polyamide (Komponente I.) enthalten als aromatische Dicarbonsäuren Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon.

Bevorzugt wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)benzophenon, 4.4'-Bis(p-aminophenylmercapto)benzophenon, 4.4'-Bis(p-aminophenylmercapto)diphenylsulfon oder Gemische davon in Frage.

Bevorzugt wird 4.4'-Bis(4-aminophenoxy)diphenylsulfon verwendet.

Das molare Einsatzverhältnis von Dicarbonsäure zu Diamin bewegt sich im Bereich von etwa 0,9 : 1 bis zu 1 : 0,9.

Um eine verbesserte Hydrolysebeständigkeit der aromatischen Polyamide (Komponente I.) zu erreichen, können noch 0,01 bis 10 Mol-% - bezogen auf die Summe von Dicarbonsäure und Diamin - eines niedermolekularen aliphatischen, araliphatischen oder aromatischen Carbonsäureamids zugesetzt werden. Hierbei kann der aromatische Rest durch Halogen oder durch $C_1$- bis $C_4$-Alkylreste substituiert sein. Diese Maßnahme wird in DE-OS 38 04 401 beschrieben.

Die Hydrolysebeständigkeit kann ebenfalls dadurch verbessert werden, indem die Dicarbonsäure in geringem Überschuß eingesetzt (DE-OS 39 35 467) oder, falls Dicarbonsäure und Diamin ungefähr äquimolar vorliegen, zusätzlich eine Monocarbonsäure zugegeben wird (DE-OS 39 35 468).

Die Herstellung der aromatischen Polyamide ist grundsätzlich bekannt. Sie wird u. a. in DE-OS 36 09 011 beschrieben.

Bevorzugt wird bei der Herstellung der aromatischen Polyamide ein Phosphor enthaltender Katalysator verwendet. Hierfür kommen insbesondere Säuren der allgemeinen Formel $H_3PO_a$ mit a = 2 bis 4 sowie Derivate davon in Frage. Insbesondere sind Phosphorsäure, Phosphorige Säure, Hyperphosphorige Säure, Phosphonsäure, z. B. Methanphosphonsäure, Phenylphosphonsäure; Phosphonigsäure, z. B. Benzolphosphonigsäure; Phosphinsäure, z. B. Diphenylphosphinsäure, zu nennen. Anstelle der reinen Säure können auch Salze davon eingesetzt werden. Geeignete Kationen sind z. B. Metalle der Alkali- bzw. Erdalkaligruppe, Zinn, o. ä.

Der Katalysator wird in einer Menge von 0,01 bis 4,0 Mol-%, vorzugsweise 0,2 bis 2,0 Mol-% - bezogen auf die Summe von Dicarbonsäure und Diamin - eingesetzt.

Eine bevorzugte Arbeitsweise bei der Herstellung der aromatischen Polyamide ist es, neben dem Katalysator noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin oder Piperidinring bilden können.

Sofern ein Cokatalysator benutzt wird, wird er in einer Menge von 0,05 bis 4 Mol-%, vorzugsweise von 0,2 bis 2 Mol-% - bezogen auf die Summe Dicarbonsäure und Diamin - eingesetzt. In besonders bevorzugten Fällen wird der Cokatalysator in einer äquivalenten Menge zu dem Katalysator in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Glastemperatur ($T_g$) der aromatischen Polyamide liegt im Bereich von 190 bis 270 °C, die Viskositätszahlen (J-Werte) bei etwa 30 bis 250 $cm^3/g$, bevorzugt bei 60 bis 120 $cm^3/g$.

Amorphe Polyamide (Komponente II.) sind grundsätzlich bekannt [H. G. Elias, **Neue Polymere Werkstoffe** - C. Hanser Verlag, München/Wien (1975)].

Als amorphe Polyamide kommen solche in Frage, die entweder aus einem Diamin und einer Dicarbonsäure oder aus $\alpha,\omega$-Aminocarbonsäuren bzw. den entsprechenden Lactamen hergestellt worden sind. Es können Homo- oder auch Copolyamide sein. Diese Polyamide sind amorph, wenn sie in Abwesenheit der Komponente I. keine meßbare Fernordnung aufweisen (H. G. Elias, **Makromoleküle**, 5. Aufl., Verlag Hüthig und Wept (S. 725 - 729).

Als Diamine sind solche mit 2 bis 15 C-Atomen im Kohlenstoffgerüst zu nennen, wie z. B. Tetramethylendiamin, Hexamethylendiamin, Octamethylendiamin, Decamethylendiamin, Dodecamethylendiamin, Trimethylhexamethylendiamine, Bis(4-aminocyclohexyl)methan, Bis(4-amino-3-methylcyclohexyl)methan, Isophorondiamin, o. ä. Es können auch Gemische der Diamine eingesetzt werden.

Die Dicarbonsäuren weisen 4 bis 40 C-Atome im Kohlenstoffgerüst auf, wie z. B. Bernsteinsäure, Adipinsäure, Korksäure, Sebacinsäure, Undecandicarbonsäure, Dodekandicarbonsäure, Cyclohexandicarbonsäure, Terephthalsäure, Isophthalsäure, o. ä. Gemische der Dicarbonsäuren können gleichfalls verwendet werden.

Als $\alpha$, -Aminocarbonsäuren bzw. deren Lactame kommen solche mit 5 bis 14 C-Atomen im Kohlenstoffgerüst in Frage, wie z. B. Caprolactam, Laurinlactam o. ä.

Bevorzugte amorphe Polyamide sind z. B. aufgebaut aus

- Terephthalsäure und Trimethylhexamethylendiamin, wobei die Terephthalsäure bis zu 40 Mol-% durch andere Dicarbonsäuren und Trimethylhexamethylendiamin bis zu 60 Mol-% durch andere aliphatische Diamine ersetzt sein kann;
- Isophthalsäure und Hexamethylendiamin, wobei Hexamethylendiamin bis zu 40 Mol-% durch andere aliphatische Diamine ersetzt sein kann;
- Isophthalsäure, Bis(4-amino-3-methylcyclohexyl)methan und Laurinlactam, wobei Dicarbonsäure und Diamin in etwa äquimolaren Mengen eingesetzt werden und der Laurinlactamanteil etwa 25 bis 45 Mol-% (bezogen auf die gesamte Ausgangsmischung) beträgt.

Die Herstellung der amorphen Polyamide ist z. B. aus EP-A-0 053 876; EP-A-0 271 308; DE-A-36 00 015; Polymer News 11, 40 ff. (1985) bekannt.

Die amorphen Polyamide, die in den erfindungsgemäßen Formmassen eingesetzt werden, weisen eine Glastemperatur ($T_g$) im Bereich von 70 bis 220 °C, vorzugsweise von 130 bis 170 °C, sowie Viskositätszahlen (J-Werte) im Bereich von 30 bis 300, vorzugsweise von 60 bis 200 $cm^3/g$, auf.

Die Komponenten I. und II. können auf üblichen Maschinen durch Spritzguß oder Extrusion gemischt

und zu Formmassen verarbeitet werden.

Die Formmassen können zusätzlich noch Füllstoffe, wie Talkum oder Verstärkungsmittel, wie Glas-, ARAMID$^R$- oder Kohlefasern, sowie andere übliche Zusätze, wie z. B. Pigmente oder Stabilisatoren, enthalten.

Die erfindungsgemäßen Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Es wurde festgestellt, daß die erfindungsgemäßen Formmassen z. B. gegenüber solchen, die nur aus amorphen Polyamiden bestehen, eine deutlich verbesserte Wärmeformbeständigkeit und Dauergebrauchstemperatur zeigen.

Die in der Beschreibung und in den Beispielen genannten Parameter wurden mit Hilfe nachstehender Verfahren bestimmt.

Der Glaspunkt ($T_g$) wurde unter Verwendung eines DSC (METTLER TA 3 000) bei einer Aufheizrate von 20 °C/min. bestimmt.

Die Viskositätszahlen (J-Werte) wurden an 0,5 % Gew.-%igen Lösungen der Polyamide in einem Phenol/o-Dichlorbenzol-Gemisch (1 : 1 Gewichtsteile) bei 25 °C nach DIN 53 728 bestimmt.

Die Wärmeformbeständigkeit (Vikat A/50) wurde gemäß DIN 53 460 bestimmt.

Die Wasseraufnahme wurde gravimetrisch gemäß DIN 53 495 (ISO 150 62) bestimmt.

Mit Buchstaben gekennzeichnete Beispiele sind nicht erfindungsgemäß.

## Beispiele

### Beispiel 1

4 g eines aromatischen Polyamids (Isophthalsäure/4,4'-Bis(4-aminophenoxi)diphenylsulfon-Molverhältnis = 1 : 1) - $T_g$: 252 °C; J-Wert: 65 $cm^3/g$) und 36 g eines amorphen Polyamids (Terephthalsäure/Trimethylhexamethylendiamin-Molverhältnis = 1 : 1) - $T_g$: 152 °C; J-Wert: 14,2 $cm^3/g$ wurden in einem Laborkneter (Fa. Haake) 15 min. bei 320 °C unter Stickstoffabdeckung miteinander vermischt. Man erhielt ein homogenes Blend. Gemäß DSC war nur ein $T_g$-Wert zu erkennen.

J-Wert: 84 $cm^3/g$ $T_g$: 155 °C

### Beispiele 2 - 9

Die Beispiele 2 - 9 wurden analog Beispiel 1 durchgeführt, jedoch wurde das Mischungsverhältnis aromatisches Polyamid zu amorphem Polyamid variiert. Die Anteile der einzelnen Komponenten sowie die Eigenschaften der erhaltenen Formmassen zeigt Tabelle 1.

Tabelle 1

| Beispiel | PA*) [Gew.-%] | APA**) [Gew.-%] | J-Wert [$cm^3/g$] | $T_g$ [°C] |
|---|---|---|---|---|
| 1 | 10 | 90 | 84 | 155 |
| 2 | 20 | 80 | 103 | 158 |
| 3 | 30 | 70 | 97 | 164 |
| 4 | 40 | 60 | 74 | 182 |
| 5 | 50 | 50 | 49 | 196 |
| 6 | 60 | 40 | 61 | 205 |
| 7 | 70 | 30 | 57 | 214 |
| 8 | 80 | 20 | 43 | 222 |
| 9 | 90 | 10 | 50 | 238 |

*) PA: aromatisches Polyamid
**) APA: amorphes Polyamid

Beispiele 10 - 12

Eine Granulatmischung jeweils entsprechend den Beispielen 1 - 3 wurde auf einem Zweischneckenkneter (Typ ZSK 30 - Fa. Werner und Pfleiderer) bei 340 °C Gehäusetemperatur und einem Durchsatz von 7 kg/h in der Schmelze gemischt und anschließend granuliert. Unter diesen Bedingungen wurde ein transparentes Blend erhalten, das zu Prüfkörpern verarbeitet wurde. Die Eigenschaften dieser Prüfkörper zeigt Tabelle 2.

Tabelle 2

| Beispiel | PA*) [Gew.-%] | APA**) [Gew.-%] | $T_g$ [°C] | VICAT A/50 [°C] | Wasseraufnahme [Gew.-%] | VICAT A/50 ***) [°C] |
|---|---|---|---|---|---|---|
| 10 | 10 | 90 | 155 | 149 | 5,26 | 90 |
| 11 | 20 | 80 | 158 | 153 | 4,78 | 98 |
| 12 | 30 | 70 | 164 | 160 | 4,37 | 108 |
| A | 0 | 100 | 154 | 147 | 5,77 | 87 |

*) PA: aromatisches Polyamid
**) APA: amorphes Polyamid
***) nach Wasseraufnahme

**Patentansprüche**

**1.** Polyamidformmasse enthaltend
I. aromatisches Polyamid mit der Grundstruktur

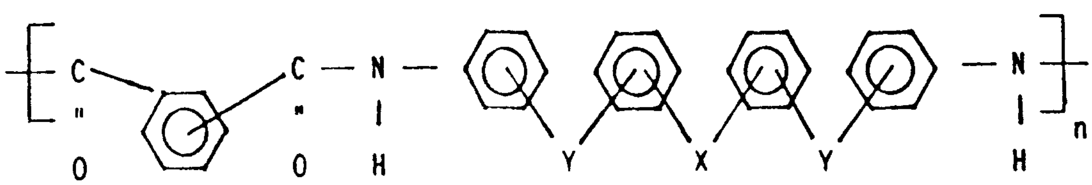

wobei
X: $-SO_2-$; -CO-
Y: -O-; -S-
bedeuten,

und

II. amorphes Polyamid.

**2.** Formmasse gemäß Anspruch 1,
dadurch gekennzeichnet,
daß in der Formmasse das Gewichtsverhältnis von Komponente I. zu Komponente II. 99 : 1 bis 1 : 99 beträgt.

**3.** Formmasse gemäß Anspruch 1 und 2,
dadurch gekennzeichnet,
daß in der Formmasse das Gewichtsverhältnis von Komponente I. zu Komponente II. 90 : 10 bis 10 : 90 beträgt.